# EUROPÄISCHE PATENTSCHRIFT

(11) **EP 0 880 560 B1**
(45) Veröffentlichungstag und Bekanntmachung des Hinweises auf die Patenterteilung: **30.05.2001**
(21) Anmeldenummer: 97900580.8
(22) Anmeldetag: 09.01.1997
(51) Int. Cl.: C09B 67/22, C09B 67/08, C09B 5/62, C09D 5/02

(54) **FÜR WASSERBASISLACKE GEEIGNETES N,N'-DIMETHYLPERYLEN-3,4,9,10-TETRACARBONSÄUREDIIMIDPIGMENT**
N,N'-DIMETHYLPERYLENE-3,4,9,10-TETRACARBOXYLIC ACID DIIMIDE PIGMENTS SUITABLE FOR WATER-BASED PAINTS
PIGMENT DE DIIMIDE D'ACIDE N,N'-DIMETHYLPERYLENE-3,4,9,10-TETRACARBOXYLIQUE, POUR PEINTURE AQUEUSE

(30) Priorität: 19.01.1996 DE 19601752
(43) Veröffentlichungstag der Anmeldung: 02.12.1998
(73) Patentinhaber: BASF AKTIENGESELLSCHAFT, 67056 Ludwigshafen (DE)
(72) Erfinder: HENNING, Georg, D-67061 Ludwigshafen (DE); BLASCHKA, Peter, D-67069 Ludwigshafen (DE); BÖHM, Arno, D-68305 Mannheim (DE)
(86) Internationale Anmeldenummer: EP9700064
(87) Internationale Veröffentlichungsnummer: WO9726301

(56) Entgegenhaltungen:
- EP-A- 0 636 666
- BE-A- 662 638
- BE-A- 679 457
- DE-A- 3 016 717
- FR-A- 1 576 477
- FR-A- 2 300 115
- GB-A- 1 313 147

## Beschreibung

Die vorliegende Erfindung betrifft ein neues, für Wasserbasislacke geeignetes N,N'-Dimethylperylen-3,4,9,10-tetracarbonsäurediimidpigment, welches durch Belegung des in wäßrigem Medium suspendierten Diimids mit einem Carboxylgruppen tragenden Harz in Gegenwart von Perylen-3,4-dicarbonsäureimid-9-sulfonsäure oder deren Salzen und einem C₈-C₁₈-Alkyl- oder -Alkenylamin, Isolierung und Trocknung des belegten Diimids und anschließende trockene Vermahlung erhältlich ist.

Außerdem betrifft die Erfindung die Herstellung dieses Pigments und seine Verwendung zum Pigmentieren von Wasserbasislacken sowie Wasserbasislacke, welche dieses Pigment enthalten.

Bekanntermaßen fällt N,N'-Dimethylperylen-3,4,9,10-tetracarbonsäurediimid (C.I. Pigment Red 179) bei der Synthese in einer Form an, welche bei direkter Einarbeitung in Lacksysteme oder andere hochmolekulare organische Systeme zu schlechten rheologischen Eigenschaften und nicht zufriedenstellender Koloristik der pigmentierten Systeme führt. Daher wird durch eine zusätzliche Behandlung des Pigments versucht, seine anwendungstechnischen Eigenschaften zu verbessern.

So wird in der DE-A-2485481 ein Verfahren zur Herstellung von lasierendem, farbstarkem C.I. Pigment Red 179 beschrieben, bei dem während der Synthese des Diimids aus Perylen-3,4,9,10-tetracarbonsäuredianhydrid und wäßrigem Methylamin zur Vervollständigung der Umsetzung durch Erhitzen eine Harzsäure zugesetzt wird, die bei der Isolierung des Pigments wieder ausgewaschen wird oder als Erdalkalisalz auf das Pigment aufgefällt wird.

Aus der DE-A-43 25 247 ist die Verwendung von Perylen-3,4-dicarbonsäureimid-9-sulfon- oder -carbonsäuren und deren Salzen als Pigmentadditiv für C.I. Pigment Red 179 bekannt, wobei zusätzlich auch Polymere mit polaren Ankergruppen wie Polymere auf der Basis von Ethylenoxid- und Propylenoxid-Addukten an 2-(Diethyl)aminoethanol oder Blockcopolymere von Polyethylenimin und 6-Caprolacton eingesetzt werden können. Die Belegung des Pigments mit Additiv und gewünschtenfalls Polymer erfolgt durch Rühren einer wäßrigen Suspension des bei der Synthese als wasserfeuchter Preßkuchen isolierten Diimids und der Belegungsmittel und anschließendes Erhitzen oder durch Verreiben oder Vermahlen des zuvor getrockneten Diimids mit den Belegungsmitteln in An- oder Abwesenheit von Wasser. Derartig belegtes C.I. Pigment Red 179 zeigt zwar gegenüber dem unbelegten Pigment eine deutliche Verbesserung hinsichtlich Rheologie und Koloristik (brillante, gelbstichigrote, lasierende Färbungen), jedoch wird kein Pigment beschrieben, welches speziell in Wasserbasislacken eingesetzt werden kann.

Der Erfindung lag daher die Aufgabe zugrunde, ein für Wasserbasislacke geeignetes N,N'-Dimethylperylen-3,4,9,10-tetracarbonsäurediimidpigment mit vorteilhaften Anwendungseigenschaften bereitzustellen.

Demgemäß wurde ein für Wasserbasislacke geeignetes N,N'-Dimethylperylen-3,4,9,10-tetracarbonsäurediimidpigment gefunden, welches durch Belegung des in wäßrigem Medium suspendierten Diimids mit einem Carboxylgruppen tragenden Harz in Gegenwart von Perylen-3,4-dicarbonsäureimid-9-sulfonsäure oder deren Salzen und einem C₈-C₁₈-Alkyl- oder -Alkenylamin, Isolierung und Trocknung des belegten Diimids und anschließende trockene Vermahlung erhältlich ist.

Weiterhin wurde das hierdurch definierte Verfahren zur Herstellung des N,N'-Dimethylperylen-3,4,9,10-tetracarbonsäurediimidpigments gefunden.

Außerdem wurde die Verwendung dieses Pigments zur Pigmentierung von Wasserbasislacken gefunden.

Das neue N,N'-Dimethylperylen-3,4,9,10-tetracarbonsäurediimidpigment ist vorteilhaft nach dem erfindungsgemäßen Verfahren erhältlich, bei dem das in wäßrigem Medium möglichst feinteilig suspendierte Diimid mit einem Carboxylgruppen tragenden Harz, Perylen-3,4-dicarbonsäureimid-9-sulfonsäure oder deren Salzen und einem C₈-C₁₈-Alkyl- oder -Alkenylamin bzw. den Umsetzungsprodukten dieser Substanzen belegt wird und das derart belegte Diimid nach seiner Isolierung noch einer trockenen Vermahlung unterzogen wird.

Als Carboxylgruppen tragendes Harz eignen sich insbesondere natürliche und modifizierte natürliche Harze, vor allem Kolophoniumharze wie Kolophonium selbst und seine allgemein bekannten Derivate, z.B. dimerisiertes, polymerisiertes, hydriertes und disproportioniertes Kolophonium und die Umsetzungsprodukte mit Malein- oder Fumarsäure. Selbstverständlich können auch Gemische dieser Harze eingesetzt werden.

In der Regel kommen 2 bis 15 Gew.-%, bevorzugt 8 bis 12 Gew.-% Harz, bezogen auf Perylen-3,4,9,10-tetracarbonsäuredianhydrid, zum Einsatz.

Das Pigmentadditiv Perylen-3,4-dicarbonsäureimid-9-sulfonsäure wird bevorzugt in Form der freien Säure eingesetzt, kann jedoch auch als Alkalimetallsalz, z.B. Natrium- oder Kaliumsalz, Ammoniumsalz oder (insbesondere C₈-C₁₈-)Alkylammoniumsalz eingesetzt werden.

Geeignete Mengen Perylen-3,4-dicarbonsäureimid-9-sulfonsäure betragen im allgemeinen 0,5 bis 4 Gew.-%, vorzugsweise 1,5 bis 2 Gew.-%, bezogen auf Perylen-3,4,9,10-tetracarbonsäuredianhydrid.

Als Amin eignen sich aliphatische Amine mit in der Regel 8 bis 18 C-Atomen, bevorzugt 12 bis 18 C-Atomen, die ungesättigt sein können, vorzugsweise aber gesättigt sind. Unter diesen Aminen sind einwertige Amine mit primärer Aminogruppe besonders geeignet. Als Beispiele seien n-Octylamin, n-Decylamin, n-Dodecylamin, n-Tetradecylamin, n-Hexadecylamin (Cetylamin), Oleylamin und insbesondere n-Octadecylamin (Stearylamin) genannt.

Das Amin wird üblicherweise in einer Menge von 2 bis 15 Gew.-%, bevorzugt 8 bis 12 Gew.-%, bezogen auf Perylen-3,4,9,10-tetracarbonsäuredianhydrid, eingesetzt.

Die erfindungsgemäße Belegung des Diimids erfolgt an Pigmentteilchen, die möglichst feinteilig in einem wäßrigen Medium suspendiert sind. Solche Suspensionen können beispielsweise durch Aufrühren des bei der Diimidsynthese anfallenden, wasserfeuchten Preßkuchens in Wasser oder durch Auflösen des isolierten und getrockneten Diimids in Schwefelsäure und anschließendes Ausfällen in Wasser erhalten werden.

Bevorzugt wird die Belegung jedoch mit der Diimidsynthese gekoppelt, da auf diese Weise die besten Ergebnisse erzielt werden und zusätzliche Arbeitsschritte gespart werden.

Die Synthese des N,N'-Dimethylperylen-3,4,9,10-tetracarbonsäurediimids wird vorteilhaft, wie in der DE-A-43 25 247 beschrieben, durch Umsetzung von in Wasser suspendiertem Perylen-3,4,9,10-tetracarbonsäuredianhydrid mit der 2 bis 4-fachen molaren Menge Methylamin in Form einer bevorzugt 40 gew.-%igen wäßrigen Lösung vorgenommen. Die Zugabe des Amins erfolgt dabei unter Kühlen auf etwa 0 bis 10°C, vorzugsweise 0 bis 5°C. Anschließend wird das Reaktionsgemisch in der Regel 2 bis 3 h bei 5 bis 10°C und dann zur Vervollständigung der Reaktion üblicherweise 1 bis 2 h bei 70 bis 90°C gerührt.

Harz und Perylen-3,4-dicarbonsäureimid-9-sulfonsäure werden der Suspension des Perylen-3,4,9,10-tetracarbonsäuredianhydrids bevorzugt vor der Zugabe von Methylamin zugegeben, sie können aber auch nach der Imidierung zugesetzt werden. Das Amin (insbesondere Stearylamin) wird nach der Diimidbildung zugegeben. Vorzugsweise wird eine Lösung des Amins in einer wasserfreien oder wasserhaltigen organischen Säure wie Eisessig oder verdünnter Essigsäure oder einer verdünnten anorganischen Säure wie Schwefelsäure verwendet, Amin und Säure können aber auch getrennt voneinander zugesetzt werden. Durch die Anwesenheit der Säure wird der pH-Wert der Suspension gesenkt (übliche pH-Werte liegen bei etwa 3 bis 5) und das als Methylammoniumsalz gelöst vorliegende Harz auf den Pigmentteilchen ausgefällt.

Verfahrenstechnisch geht man zweckmäßigerweise so vor, daß man das nach abgeschlossener Imidierung vorliegende Reaktionsgemisch auf etwa 50 bis 65°C abkühlt, Amin und Säure bzw. eine saure Lösung des Amins zugibt und weitere 1 bis 3 h bei dieser Temperatur nachrührt.

Die anschließende Isolierung des mit Harz, Perylen-3,4-dicarbonsäureimid-9-sulfonsäure und Amin belegten Diimids kann nach Abkühlen auf Raumtemperatur in üblicher Weise durch Filtration, Waschen mit Wasser und Trocknen bei 80 bis 100°C erfolgen.

Der letzte Schritt des erfindungsgemäßen Verfahrens besteht in einer Vermahlung des trockenen, belegten Diimids z. B. in einer Kugelmühle auf eine mittlere Teilchengröße von vorzugsweise 0,02 bis 0,06 µm, was in der Regel 3 bis 6 h dauert.

Das erfindungsgemäß belegte Diimid läßt sich leicht und ohne Anbackung an den Kugeln oder der Mühlenwand vermahlen und fällt bei der Mahlung als sehr lockeres, direkt für die Lackherstellung geeignetes Pulver an.

Das erfindungsgemäße N,N'-Dimethylperylen-3,4,9,10-tetracarbonsäurediimidpigment eignet sich vorteilhaft zur Pigmentierung von Wasserbasislacken und zeichnet sich dabei durch gute Benetzbarkeit und damit auch hervorragende Dispergierbarkeit und Transparenz sowie einen brillanten, gelbstichig roten Farbton aus.

### Beispiele

### A) Herstellung erfindungsgemäßer N,N'-Dimethylperylen-3,4,9,10-tetracarbonsäurediimidpigmente

### Beispiele 1 bis 6

100 g Perylen-3,4,9,10-tetracarbonsäuredianhydrid wurden in 500 ml Wasser eingetragen, dann wurden a g Harz K und b g Perylen-3,4-dicarbonsäureimid-9-sulfonsäure(salz) P zugegeben. Nach einstündigem Nachrühren wurde die Suspension durch Zugabe von 350 g Eis auf 0°C gekühlt und nach Zugabe von 80 ml einer 40 gew.-%igen wäßrigen Methylaminlösung zunächst 2 h bei 5°C und anschließend 1,5 h bei 80°C gerührt. Nach Abkühlen auf 60°C wurde eine Lösung von c g Amin A in 100 ml Eisessig zugegeben.

Nach einstündigem Nachrühren und Abkühlen auf Raumtemperatur wurde das belegte Diimid abfiltriert, mit Wasser neutral gewaschen und bei 80°C getrocknet.

Anschließend wurden jeweils 30 g des getrockneten, belegten Diimids in einem 500 ml Mahlbecher mit 200 ml Achatkugeln (5 bis 15 mm Durchmesser) in einer Planeten-Schnellmühle 5 h vermahlen.

Dabei wurden jeweils etwa 27 g feinteiliges (mittlere Teilchengröße 0,02 bis 0,06 µm), brillantes, gelbstichig rotes, transparentes und in Wasserbasislacken sehr gut dispergierbares N,N'-Dimethylperylen-3,4,9,10-tetracarbonsäurediimidpigment erhalten.

Weitere Einzelheiten zu diesen Versuchen sowie deren Ergebnisse sind in der folgenden Tabelle zusammengestellt.

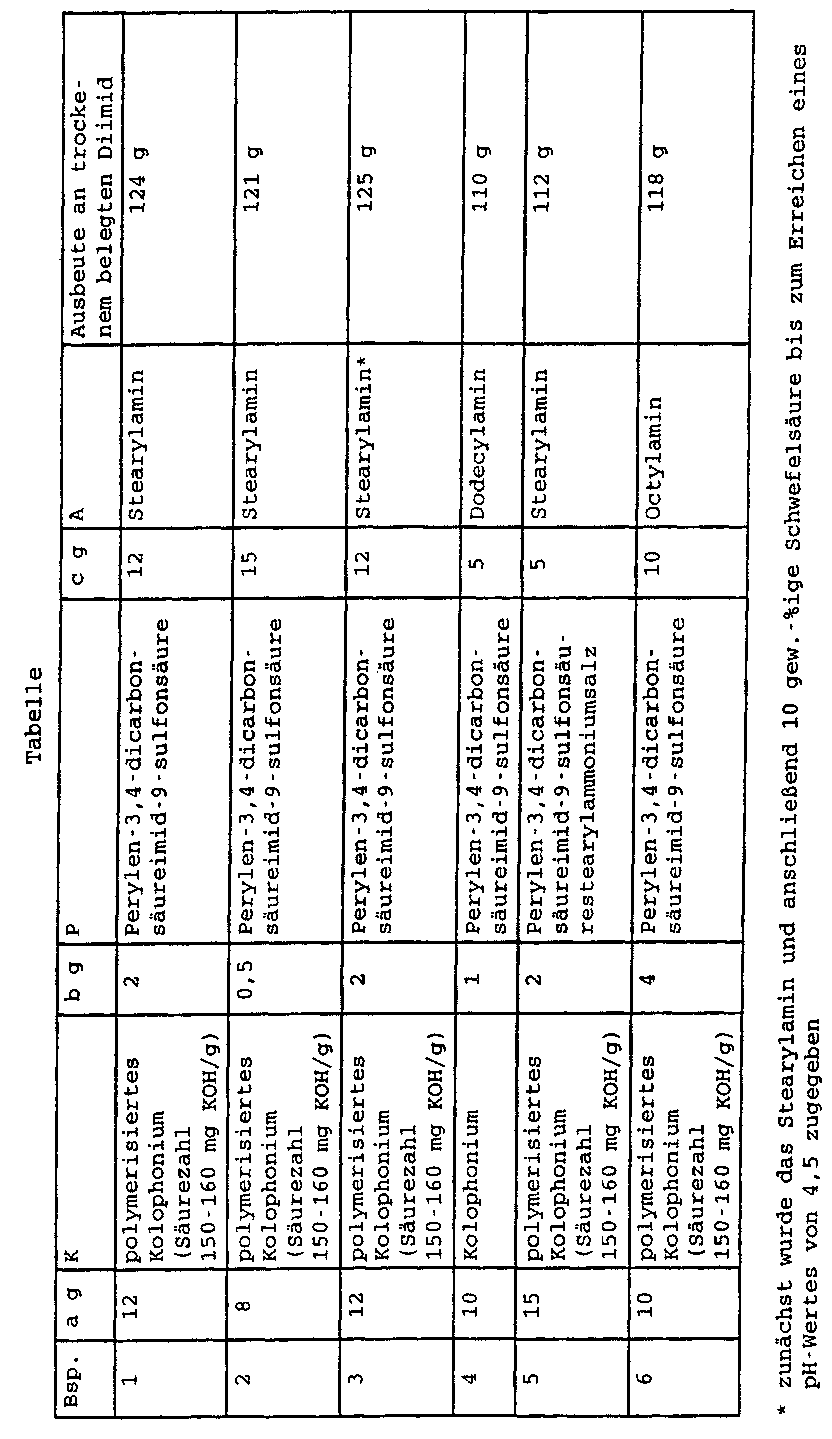

### Beispiel 7

Es wurde analog Beispiel 1 vorgegangen, jedoch wurde das Kolophoniumharz erst nach der Imidierung vor der Zugabe der Stearylaminlösung zugegeben. Nach der Trocknung wurden 123 g belegtes Diimid erhalten.

### Beispiel 8

Die Synthese des Diimids wurde analog Beispiel 1, jedoch nur in Gegenwart der Perylen-3,4-dicarbonsäureimid-9-sulfonsäure vorgenommen. Nach Abkühlen auf 40°C wurde das mit der Sulfonsäure belegte Diimid abfiltriert und neutral gewaschen.

Der feuchte Preßkuchen wurde dann in 500 ml Wasser aufgerührt. Der pH-Wert der Suspension wurde anschließend mit 2 gew.-%iger Natronlauge auf 10 eingestellt, dann wurde das Kolophoniumharz zugegeben und 1 h nachgerührt. Danach wurde die essigsaure Stearylaminlösung zugegeben. Nach einstündigem Nachrühren wurde wie in Beispiel 1 aufgearbeitet. Es wurden 110 g getrocknetes, belegtes Diimid erhalten.

### Vergleichsbeispiel V 1

Es wurde analog Beispiel 1 vorgegangen, jedoch wurde das Kolophoniumharz (10 Gew.-%, bezogen auf das Diimid) erst nach der Synthese, Isolierung und Kugelvermahlung des mit Perylen-3,4-dicarbonsäureimid-9-sulfonsäure und Stearylamin belegten Diimids zugemischt.

### Vergleichsbeispiel V 2

Es wurde analog Beispiel 1 vorgegangen, jedoch wurde Stearylamin (10 Gew.-%, bezogen auf das Diimid) erst nach der Synthese, Isolierung und Kugelvermahlung des mit dem Kolophoniumharz und Perylen-3,4-dicarbonsäureimid-9-sulfonsäure belegten Diimids zugemischt.

Beurteilung der rheologischen und koloristischen Eigenschaften

Zur Beurteilung der rheologischen Eigenschaften wurden Buntlacke hergestellt, indem jeweils 15 g Pigment in 85 g eines handelsüblichen wasserbasierenden Polyurethan-Anreibelackes mit 22 Gew.-% Festkörperanteil mit 100 ml SAZ-Perlen 2 h im Skandex dispergiert wurden.

Die Bewertung der Buntlacke erfolgte innerhalb von 30 min nach ihrer Herstellung anhand folgender Skala:
1 fließt sehr gut
2 fließt gut
3 fließt mäßig
4 zähflüssig
5 Paste

Die Pigmente aus den Beispielen 1 bis 6 sowie 7 und 8 wurden mit Note 1 bzw. 2 bewertet, während die zum Vergleich hergestellten Pigmente lediglich eine Benotung von 4 - 5 erhielten.

Zur Beurteilung der koloristischen Eigenschaften wurden Metallic-Lacke hergestellt, die jeweils 4 Gew.-% Perylimidpigment und 4 Gew.-% Aluminiumflakes, bezogen auf den Gesamtfestkörper, enthielten und auf einem handelsüblichen wasserverdünnbaren Bindemittelsystem basierten. Die erhaltenen Metallic-Lacke wurden auf ein weiß vorlackiertes Blech gespritzt und eingebrannt.

Die mit den Pigmenten aus den Beispielen 1 bis 8 erhaltenen Lackierungen waren gelbstichiger rot und deutlich brillanter als die mit den Vergleichspigmenten erhaltenen Lackierungen.

## Patentansprüche

1. Für Wasserbasislacke geeignetes N,N'-Dimethylperylen-3,4,9,10-tetracarbonsäurediimidpigment, erhältlich durch Belegung des in wäßrigem Medium suspendierten Diimids mit einem Carboxylgruppen tragenden Harz in Gegenwart von Perylen-3,4-dicarbonsäureimid-9-sulfonsäure oder deren Salzen und einem C₈-C₁₈-Alkyl- oder -Alkenylamin, Isolierung und Trocknung des belegten Diimids und anschließende trockene Vermahlung.

2. N,N'-Dimethylperylen-3,4,9,10-tetracarbonsäurediimidpigment nach Anspruch 1, bei dem die Belegung des Diimids bei dessen Synthese vorgenommen wird.

3. N,N'-Dimethylperylen-3,4,9,10-tetracarbonsäurediimidpigment nach Anspruch 1 oder 2, bei dem als Harz ein Kolophoniumharz verwendet wird.

4. N,N'-Dimethylperylen-3,4,9,10-tetracarbonsäurediimidpigment nach den Ansprüchen 1 bis 3, bei dem als Amin Stearylamin verwendet wird.

5. Verfahren zur Herstellung eines für Wasserbasislacke geeigneten N,N'-Dimethylperylen-3,4,9,10-tetracarbonsäurediimidpigments, dadurch gekennzeichnet, daß man es gemäß den in Anspruch 1 definierten Verfahrensschritten vornimmt.

6. Verfahren nach Anspruch 5, dadurch gekennzeichnet, daß man die Belegung des Diimids bei dessen Synthese vornimmt.

7. Verfahren nach Anspruch 6, dadurch gekennzeichnet, daß man Perylen-3,4,9,10-tetracarbonsäure bzw. deren Anhydrid in wäßrigem Medium in Gegenwart des Carboxylgruppen tragenden Harzes und der Perylen-3,4-dicarbonsäureimid-9-sulfonsäure oder deren Salzen mit Methylamin umsetzt, dann das C₈-C₁₈-Alkyloder -Alkenylamin sowie eine anorganische oder organische Säure zur Ausfällung des Harzes zugibt und das auf diese Weise belegte Diimid anschließend isoliert, trocknet und trocken vermahlt.

8. Verwendung des N,N'-Dimethylperylen-3,4,9,10-tetracarbonsäurediimidpigments gemäß den Ansprüchen 1 bis 4 zur Pigmentierung von Wasserbasislacken.

9. Wasserbasislacke, enthaltend das N,N'-Dimethylperylen-3,4,9,10-tetracarbonsäurediimidpigment gemäß den Ansprüchen 1 bis 4.

## Claims

1. An N,N'-dimethylperylene-3,4,9,10-tetracarboxylic diimide pigment which is suitable for aqueous basecoats and which is obtainable by coating the diimide, suspended in an aqueous medium, with a carboxyl-carrying resin in the presence of 3,4-dicarboximidoperylene-9-sulfonic acid or salts thereof and with a C₈-C₁₈-alkyl- or -alkenylamine, isolating and drying the coated diimide and then subjecting it to dry milling.

2. A pigment as claimed in claim 1, wherein coating of the diimide is carried out in the course of its synthesis.

3. A pigment as claimed in claim 1 or 2, wherein the resin used is a rosin.

4. A pigment as claimed in any of claims 1 to 3, wherein the amine used is stearylamine.

5. A process for preparing an N,N'-dimethylperylene-3,4,9,10-tetracarboxylic diimide pigment which is suitable for aqueous basecoats, which comprises the steps defined in claim 1.

6. A process as claimed in claim 5, wherein coating of the diimide is carried out in the course of its synthesis.

7. A process as claimed in claim 6, wherein perylene-3,4,9,10-tetracarboxylic acid and/or its anhydride is reacted with methylamine in an aqueous medium in the presence of the carboxyl-carrying resin and of the 3,4-dicarboximidoperylene-9-sulfonic acid or salts thereof, then the C₈-C₁₈-alkyl- or -alkenylamine and an inorganic or organic acid to precipitate the resin are added and the diimide thus coated is then isolated, dried and subjected to dry milling.

8. The use of an N,N'-dimethylperylene-3,4,9,10-tetracarboxylic diimide pigment as claimed in any of claims 1 to 4 for pigmenting aqueous basecoats.

9. An aqueous basecoat comprising an N,N'-dimethylperylene-3,4,9,10-tetracarboxylic diimide pigment as claimed in any of claims 1 to 4.

## Revendications

1. Pigment au diimide d'acide N,N'-diméthylpérylène-3,4,9,10-tétracarboxylique convenant aux laques à base aqueuse, pouvant être obtenu en revêtant le diimide en suspension dans un milieu aqueux avec une résine portant des groupes carboxyliques en présence d'acide pérylène-3,4-dicarboxyimide-9-sulfonique ou ses sels et d'une alkylamine ou alcénylamine en C₈ à C₁₈, en isolant et en séchant le diimide revêtu, puis en le broyant à sec.

2. Pigment au diimide d'acide N,N'-diméthylpérylène-3,4,9,10-tétracarboxylique selon la revendication 1, dans lequel on procède au revêtement du diimide pendant sa synthèse.

3. Pigment au diimide d'acide N,N'-diméthylpérylène-3,4,9,10-tétracarboxylique selon la revendication 1 ou 2, dans lequel on utilise comme résine une résine au colophane.

4. Pigment au diimide d'acide N,N'-diméthylpérylène-3,4,9,10-tétracarboxylique selon les revendications 1 à 3, dans lequel l'on utilise comme amine, la stéarylamine.

5. Procédé de préparation d'un pigment au diimide d'acide N,N'-diméthylpérylène-3,4,9,10-tétracarboxylique convenant aux laques à base aqueuse, caractérisé en ce que l'on procède selon les étapes de procédé définies selon la revendication 1.

6. Procédé selon la revendication 5, caractérisé en ce que l'on procède au revêtement du diimide pendant sa synthèse.

7. Procédé selon la revendication 6, caractérisé en ce que l'on met l'acide pérylène-3,4,9,10-tétracarboxylique ou son anhydride à réagir dans un milieu aqueux en présence de la résine portant des groupes carboxyliques et de l'acide pérylène-3,4-dicarboxyimide-9-sulfonique ou ses sels avec de la méthylamine, puis on ajoute l'alkylamine ou l'alcénylamine en C₈ à C₁₈, ainsi qu'un acide inorganique ou organique pour précipiter la résine, puis on isole, on sèche et on broie à sec le diimide revêtu de cette façon.

8. Utilisation du pigment au diimide d'acide N,N'-diméthylpérylène-3,4,9,10-tétracarboxylique selon les revendications 1 à 4 pour pigmenter des laques à base aqueuse.

9. Laques à base aqueuse, contenant le pigment au diimide d'acide N,N'-diméthylpérylène-3,4,9,10-tétra-carboxylique selon les revendications 1 à 4.
